# EUROPEAN PATENT SPECIFICATION

(11) **EP 2 781 416 B1**
(45) Date of publication and mention of the grant of the patent: **14.10.2015**
(21) Application number: 13159787.4
(22) Date of filing: 18.03.2013
(51) Int. Cl.: B60S 1/40

(54) **Wiper connecting apparatus**
Wischeranschlussvorrichtung
Appareil de connexion d'essuie-glace

(43) Date of publication of application: 24.09.2014
(73) Proprietor: Danyang UPC Auto Parts Co., Ltd., 212323 Danyang City Jiangsu (CN)
(72) Inventor: Yang, Chih-Ming, 212323 Danyang City (CN); Chang, Chuan-Chih, 212323 Danyang City (CN)
(74) Representative: 2K Patentanwälte Blasberg Kewitz & Reichel

(56) References cited:
- EP-A1- 1 795 406
- DE-U1- 20 321 490
- DE-U1-202012 102 614
- US-A1- 2007 067 941
- US-A1- 2011 277 265

## Description

### BACKGROUND OF THE INVENTION

### Field of the Invention

The present invention relates to a wiper structure for motor vehicle, especially a wiper connecting apparatus allowing various types of wiper driving arms to be assembled thereon.

### Description of Related Art

The wiper used for a motor vehicle is usually installed at the outer side of a motor vehicle window, the wiper is connected with a wiper driving arm of the vehicle, thereby enabling the wiper to be driven by the wiper driving arm to reciprocally swing on the motor vehicle window and to apply an external force to a wiper strip for scraping foreign objects such as rainwater or stain on the motor vehicle window.

According to the wiper structural designs available in the marketplace, different type of wiper driving arm is desired to be adopted with respect to the vehicle manufacturer and the vehicle model, however, different type of wiper driving arm requires a specified connecting apparatus for connecting and securing the wiper strip. Take the wiper structures disclosed in the US6516491, US6643889 and US6668419 for example, the disclosed wiper structures all comprise a wiper driving arm and a specially-designed connecting apparatus. Because different type of wiper driving arm requires a specified connecting apparatus for connecting the wiper strip, the wiper manufacturer has to provide various types of connecting apparatuses to customers, so the price of wiper is inevitably increased and spare connecting apparatuses would become components which are unnecessarily wasted.

As such, the applicant of the present invention has devoted himself to develop a novel wiper connecting apparatus for improving and overcoming the above-mentioned shortages.

Document DE 20 2012 102614 U discloses a wiper connecting apparatus according to the preamble of claim 1.

### SUMMARY OF THE INVENTION

The present invention is to provide a general wiper connecting apparatus, capable of allowing various types of wiper driving arms to be assembled thereon thereby providing convenience in assembly.

In another aspect, the present invention is to provide a general wiper connecting apparatus, capable of preventing components from being unnecessarily wasted thereby achieving a goal of lowering the price of wiper.

Accordingly, the present invention provides a general wiper connecting apparatus, capable of connecting various types of wiper driving arms on a wiper securing seat, the wiper connecting apparatus comprises: a main body, formed with a front end and a rear end opposite to the front end, and formed with a penetrated hole allowing a pivotal shaft of the wiper driving arm to be received therein; a head portion, extended from the front end of the main body, and formed with a positioning groove at the location connected with the main body for positioning the wiper driving arm; a tail portion, extended from the rear end of the main body, and formed with a pair of elastic clamping pieces for latching the wiper driving arm; and a pair of side boards, disposed at two sides of the main body, wherein each of the side boards is respectively formed with a through hole corresponding to the penetrated hole, and an insertion slit is respectively formed between the pair of side boards and the main body for allowing the wiper driving arm to be inserted.

In comparison with related art, the connecting apparatus provided by the present invention is designed to correspondingly work with various types of wiper driving heads, the main body thereof is formed with the penetrated hole allowing the pivotal shaft of the wiper driving arm to be received therein, the head portion is formed with a positioning groove for positioning the wiper driving arm, the tail portion is formed with the pair of elastic clamping pieces for latching the wiper driving arm, the side boards are respectively and correspondingly formed with the through hole, and the insertion slit is respectively formed between the pair of side boards and the main body, thus an goal of connecting with various types of wiper driving arms is achieved and the assembly is simplified; moreover, the connecting apparatus of the present invention can be generally used for reducing the requirement of providing spare components and preventing the waste caused by unnecessary components thereby lowering the price of wiper.

### BRIEF DESCRIPTION OF DRAWING

FIG. 1 is a perspective view showing the appearance of the wiper connecting apparatus according to the present invention;
FIG. 2 is another perspective view showing the appearance of the wiper connecting apparatus according to the present invention;
FIG. 3 is a cross sectional view showing the wiper connecting apparatus according to the present invention;
FIG. 4 is a schematic view illustrating the combination of the connecting apparatus for wiper and a securing seat according to the present invention;
FIG. 5 is a schematic view illustrating the connecting apparatus being assembled with a wiper driving arm according to the present invention;
FIG. 6 is a perspective view showing the appearance of the assembled connecting apparatus according to the present invention;
FIG. 7 is a schematic view illustrating the connecting apparatus being assembled with another wiper driving arm according to the present invention;
FIG. 8 is a perspective view showing the appearance of the connecting apparatus assembled with the another wiper driving arm according to the present invention;
FIG. 9 is a schematic view illustrating the connecting apparatus being assembled with one another wiper driving arm according to the present invention; and
FIG. 10 is a perspective view showing the appearance of the connecting apparatus assembled with the one another wiper driving arm according to the present invention.

### Detailed description of the invention

Preferred embodiments of the present invention will be described with reference to the drawings.

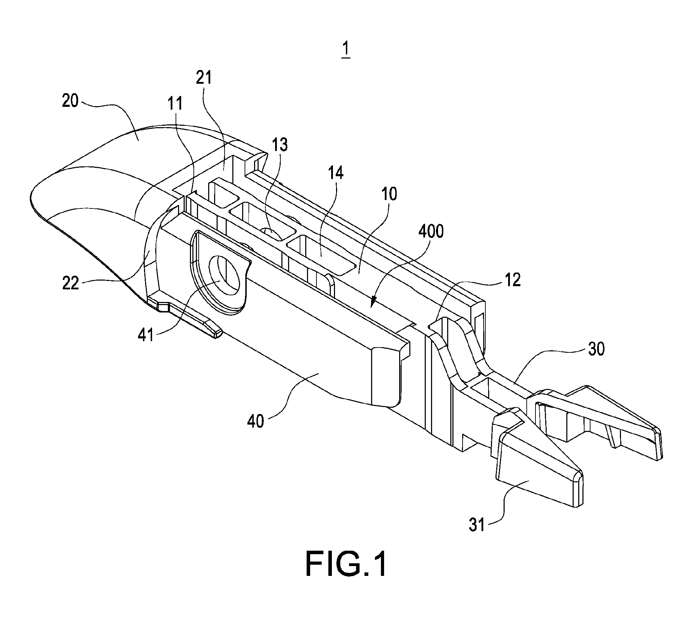

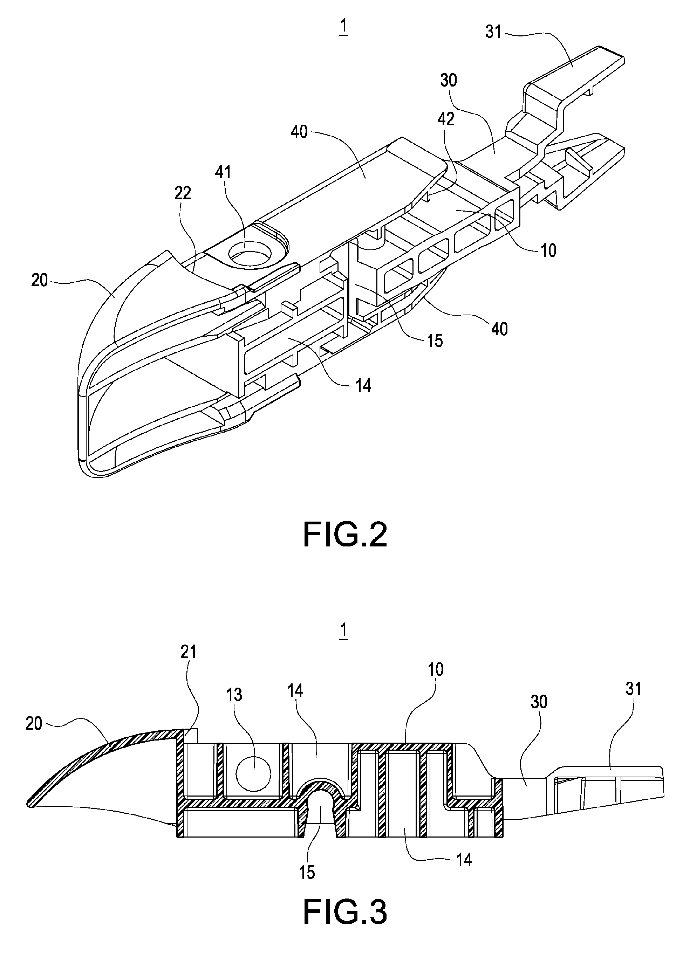

Please refer to FIG. 1 and FIG. 3, wherein FIG. 1 is a perspective view showing the appearance of the wiper connecting apparatus according to the present invention; FIG. 2 is another perspective view showing the appearance of the wiper connecting apparatus according to the present invention; and FIG. 3 is a cross sectional view showing the wiper connecting apparatus according to the present invention. The present invention provides a general wiper connecting apparatus (1), which comprises a main body (10), a head portion (20), a tail portion (30) and a pair of side boards (40).

The main body (10) is formed with a front end (11) and a rear end (12) opposite to the front end (11). The main body (10) is formed with a penetrated hole (13) penetrating the main body (10). The main body (10) is preferably formed with plural hollow grooves (14) arranged on the top and the bottom surface of the main body (10), the installation of the hollow grooves (14) is enabled to reduce the consumed material and the weight of the connecting apparatus (1). In addition, according to an embodiment of the present invention, the bottom surface of the main body (10) is formed with a securing groove (15) having a U-shaped cross section, and what shall be addressed is that the above-mentioned U-shaped cross section is adopted as an example for illustration and shall not be deemed as a limitation to the scope of the present invention.

The head portion (20) is outwardly extended from the front end (11) of the main body (10). The head portion (20) is formed with a positioning groove (21) at the location connected with the main body (10). Preferably, the width of the head portion (20) is wider than the width of the main body (10), the top surface of the positioning groove (21) is higher than the top surface of the main body (10), and the width of the positioning groove (21) is wider than the width of the main body (10). In addition, two sides of the head portion (20) are respectively formed with a positioning arc surface (22).

The tail portion (30) is extended from the rear end (12) of main body (10). The tail portion (30) is formed with a pair of elastic clamping pieces (31); according to this embodiment, the pair of clamping pieces (31) is formed in a fork shape.

The pair of side boards (40) is arranged at two sides of the main body (10), and each of the side boards (40) is respectively formed with a through hole (41) corresponding to the penetrated hole (13), and an inner wall of each of the side boards (40) is formed with plural ribs (42). An insertion slit (400) is respectively formed between the pair of side boards (40) and the main body (10). What shall be addressed is that the positioning groove (21) of the head portion (20) is in communication with the insertion slit (400).

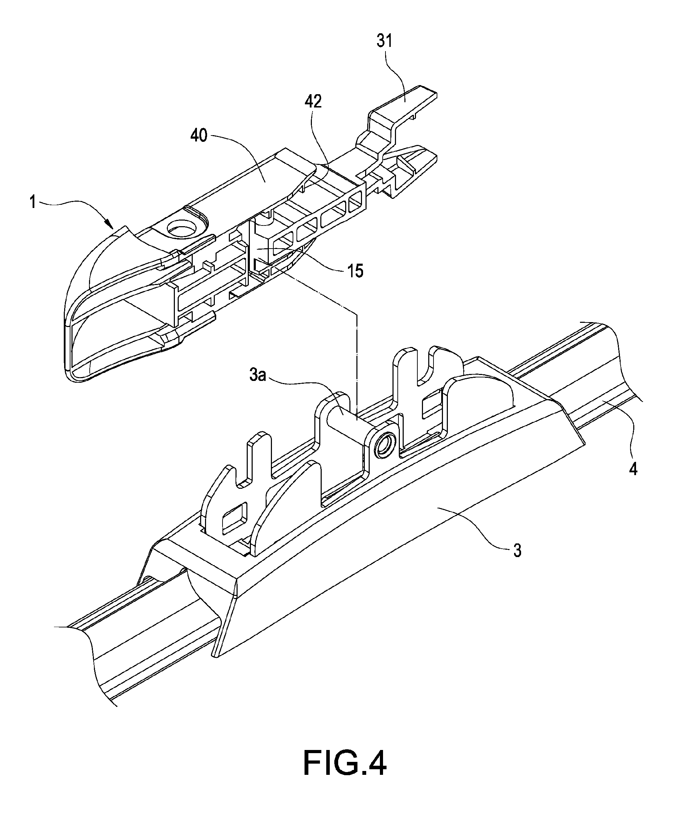

Please refer from FIG. 4 to FIG. 10, the wiper connecting apparatus (1) provided by the present invention is capable of connecting various types of wiper driving arms (2, 2', 2") on a wiper securing seat (3).

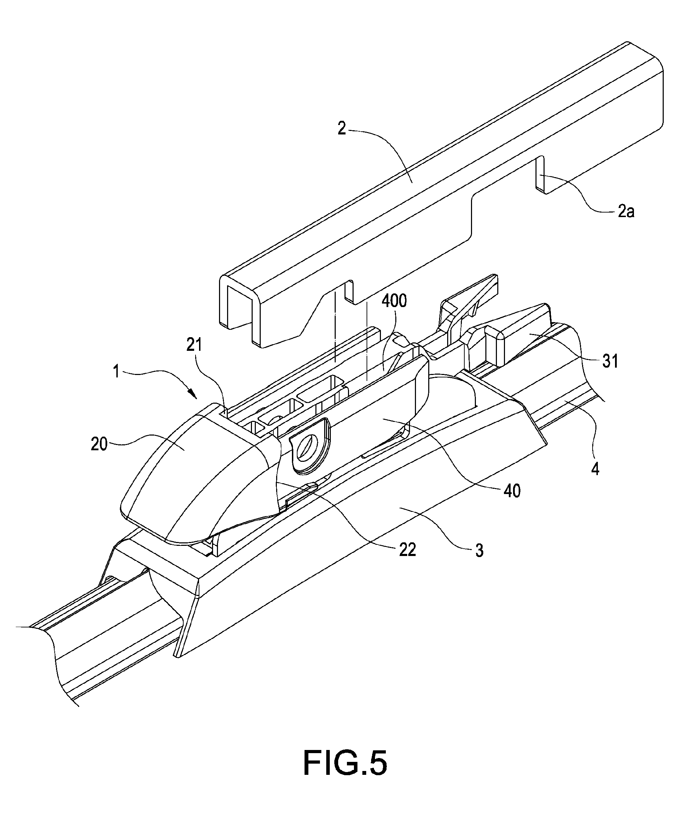

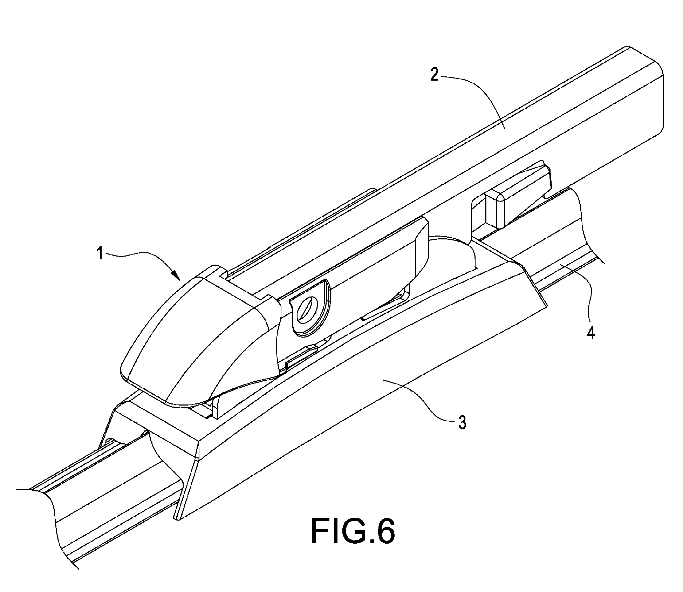

Please refer from FIG. 4 to FIG. 6, wherein FIG. 4 is a schematic view illustrating the combination of the connecting apparatus for wiper and a securing seat according to the present invention; FIG. 5 is a schematic view illustrating the connecting apparatus being assembled with a wiper driving arm according to the present invention; and FIG. 6 is a perspective view showing the appearance of the assembled connecting apparatus according to the present invention. According to this embodiment, a wiper driving arm (2) is assembled on the connecting apparatus (1), and the securing seat (3) is formed with a securing shaft (3a), the bottom surface of the securing seat (3) is installed with a wiper strip (4).

As shown in FIG. 4, in assembling, firstly the securing groove (15) of the connecting apparatus (1) is correspondingly secured on the securing shaft (3a), thereby allowing the connecting apparatus (1) to be temporally positioned on the wiper securing seat (3).

Please refer to FIG. 5, which illustrates the wiper driving arm (2) being assembled, the wiper driving arm (2) is formed as a U-shaped elongated member, and the wiper driving arm (2) is formed with a set of opened grooves (2a). Two sides of the wiper driving arm (2) are correspondingly inserted in the insertion slits (400) of the connecting apparatus (1), one end of the wiper driving arm (2) is abutted against two sides of the positioning groove (21) for positioning the above-mentioned end of the wiper driving arm (2). At this moment, the ribs (42) of each of the side boards (40) are pressed at the outer surface of the wiper driving arm (2). Furthermore, the elastic clamping pieces (31) of the connecting apparatus (1) are correspondingly clamped on the set of opened grooves (2a) thereby allowing another part of the wiper driving arm (2) to be latched for assembling the wiper driving arm (2) on the connecting apparatus (1).

As shown in FIG. 6, after the assembly is finished, the wiper driving arm (2) is linked by the connecting apparatus (1) for driving the wiper strip (4) to performing operations of scraping and/or cleaning.

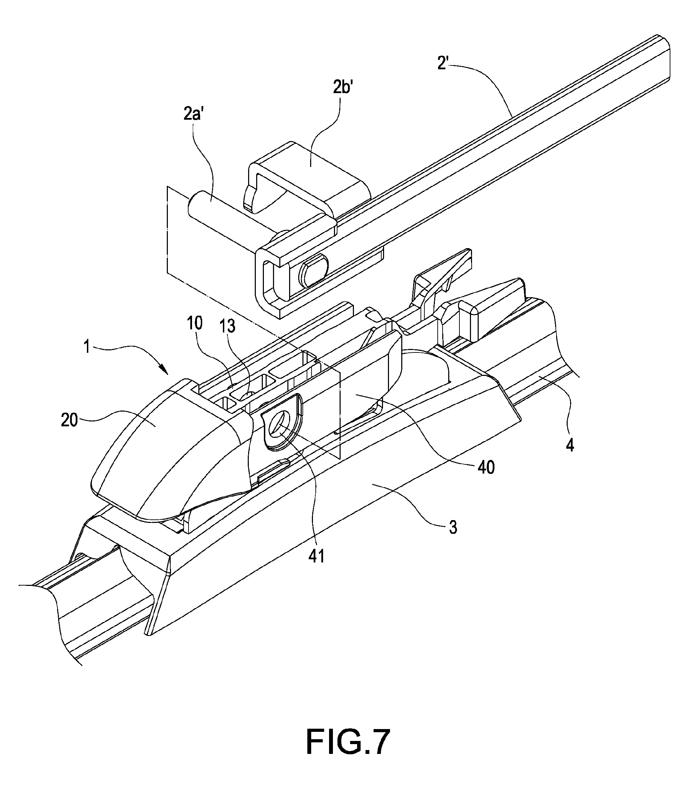

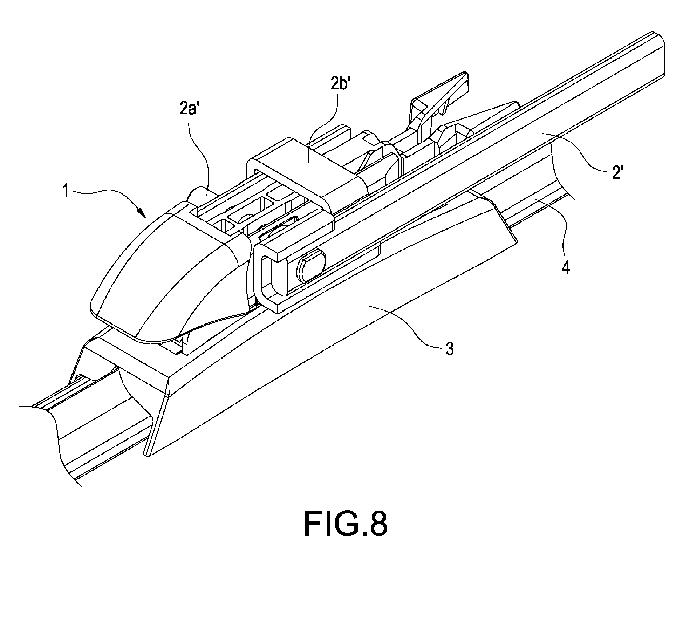

Please refer to FIG. 7 an FIG. 8, wherein FIG. 7 is a schematic view illustrating the connecting apparatus being assembled with another wiper driving arm according to the present invention; and FIG. 8 is a perspective view showing the appearance of the connecting apparatus assembled with the another wiper driving arm according to the present invention. According to this embodiment, another wiper driving arm (2') is assembled on the connecting apparatus (1). The wiper driving arm (2') is formed with a pivotal shaft (2a') and a positioning cover (2b'). The pivotal shaft (2a') is received in the through holes (41) of the pair of side boards (40) and the penetrated hole (13) of the main body (10). Moreover, the positioning cover (2b') is served to cover the main body (10) and one side of the pair of side boards (40), thereby allowing the wiper driving arm (2') to be assembled on the connecting apparatus (1).

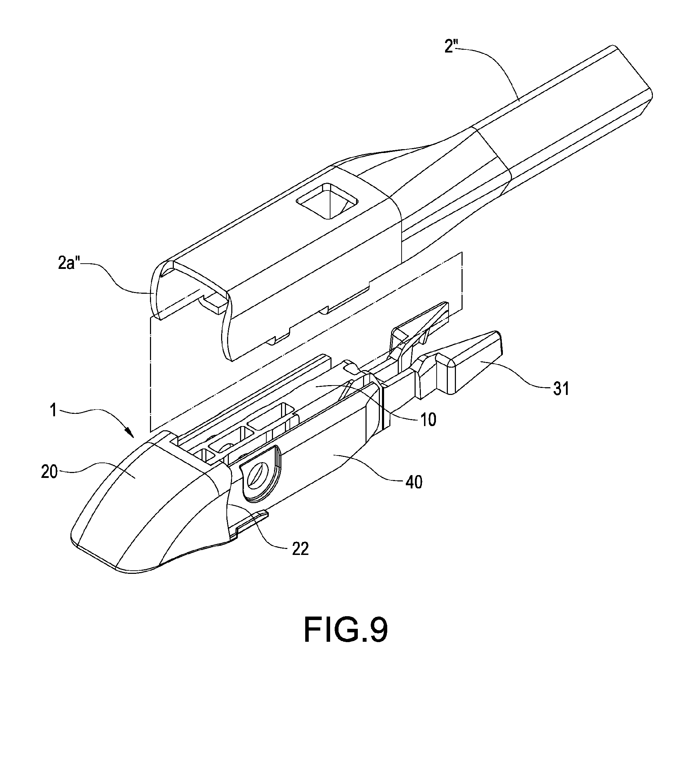

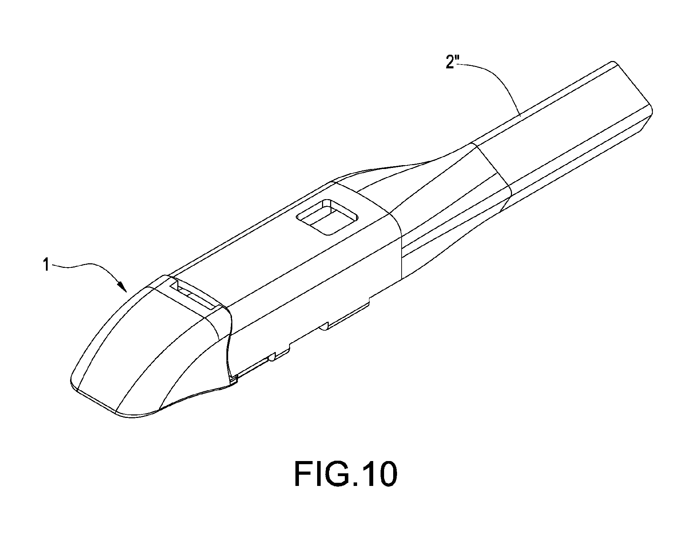

Please refer to FIG. 9 and FIG. 10, wherein FIG. 9 is a schematic view illustrating the connecting apparatus being assembled with one another wiper driving arm according to the present invention; and FIG. 10 is a perspective view showing the appearance of the connecting apparatus assembled with the one another wiper driving arm according to the present invention. According to this embodiment, one another wiper driving arm (2") is assembled on the connecting apparatus (1), and the front end of the wiper driving arm (2") is formed with an urging arc surface (2a").

According to this embodiment, the wiper driving arm (2") is connected with the connecting apparatus (1) with a sleeve means, at this moment, the urging arc surface (2a") is abutted on the positioning arc surfaces (22) formed at two sides of the head portion (20). In addition, the pair of elastic clamping pieces (31) is respectively and outwardly abutted against an inner surface of the wiper driving arm (2"), thereby allowing the wiper driving arm (2") to be assembled on the connecting apparatus (1).

## Claims

1. A general wiper connecting apparatus (1), for connecting various types of wiper
driving arms (2, 2', 2") on a wiper securing seat (3), and comprising:
a main body (10), formed with a front end (11) and a rear end (12) opposite to the front end (11), and formed with a penetrated hole (13) allowing a pivotal shaft (2a') of the wiper driving arm (2, 2', 2") to be received therein;
a head portion (20), extended from the front end (11) of the main body (10);
a tail portion (30), extended from the rear end (12) of the main body (10), and formed with a pair of elastic clamping pieces (31) for latching the wiper driving arm (2, 2', 2"); and
a pair of side boards (40), disposed at two sides of the main body (10), wherein each of the side boards (40) is respectively formed with a through hole (41) corresponding to the penetrated hole (13), the wiper connecting apparatus being **characterised in that** the head portion is formed with a positioning groove (21) at the location connected with the main body (10)
for positioning the wiper driving arm (2, 2', 2")
and an insertion slit (400) is respectively formed between the pair of side boards (40) and the main body (10) for allowing the wiper driving arm (2, 2', 2") to be inserted.

2. The general wiper connecting apparatus according to claim 1, wherein the securing seat (3) is formed with a securing shaft (3a), the bottom surface of the main body (10) is formed with a securing groove (15), and the securing groove (15) is correspondingly secured on the securing shaft (3a).

3. The general wiper connecting apparatus according to claim 2, wherein the cross section of the securing groove (15) is formed in a U shape.

4. The general wiper connecting apparatus according to any of the claims 1 to 3, wherein the main body (10) is formed with plural hollow grooves (14).

5. The general wiper connecting apparatus according to claim 4, wherein the hollow grooves (14) are arranged on the top surface and the bottom surface of the main body (10).

6. The general wiper connecting apparatus according to any of the claims 1 to 5, wherein the wiper driving arm (2, 2', 2") is formed with an urging arc surface (2a"), the head portion (20) is correspondingly formed with a positioning arc surface (22), and the urging arc surface (2a") is abutted on the positioning arc surface (22).

7. The general wiper connecting apparatus according to any of the claims 1 to 6, wherein the top surface of the positioning groove (21) is higher than the top surface of the main body (10).

8. The general wiper connecting apparatus according to any of the claims 1 to claim 7, wherein the width of the positioning groove (21) is wider than the width of the main body (10).

9. The general wiper connecting apparatus according to claim 8, wherein the positioning groove (21) is in communication with the insertion slit (400), and one end of the wiper driving arm (2, 2', 2") is abutted against two sides of the positioning groove (21).

10. The general wiper connecting apparatus according to any of the claims 1 to 9, wherein the pair of clamping pieces (31) is formed in a fork shape.

11. The general wiper connecting apparatus according to any of the claims 1 to 10, wherein an inner wall of each of the side boards (40) is formed with plural ribs (42), and the ribs (42) are pressed at the outer surface of the wiper driving arm (2, 2', 2").

12. The general wiper connecting apparatus according to any of the claims 1 to 11, wherein the wiper driving arm (2, 2', 2") is formed with a set of opened grooves (2a), and the pair of elastic clamping pieces (31) is correspondingly clamped on the set of opened grooves (2a).

## Patentansprüche

1. Eine allgemeine Scheibenwischer-Verbindungs-Vorrichtung (1) zum Verbinden an verschiedenen Arten von Scheibenwischer-Antriebsarmen (2, 2', 2 ") auf einem Scheibenwischer-Befestigungs-Sitz (3) und umfassend:
ein Hauptteil (10) gebildet mit einer Frontpartie (11) und einer Heckpartie (12) gegenüberliegend der Frontpartie (11) und gebildet mit einer Durchdringungsbohrung (13) die einer drehbare Welle (2a ') des Scheibenwischer-Antriebsarms (2, 2', 2") ermöglicht, darin aufgenommen zu werden;
ein Kopfteil (20), das sich von der Frontpartie (11) des Hauptteils (10) erstreckt,
ein Heckteil (30), das sich von dem Heckpartie (12) des Hauptteils (10) erstreckt, und
mit einem Paar von elastischen Klemmstücken (31) zum Einrasten des Scheibenwischer-Antriebsarms (2, 2 ', 2 ") ausgeformt ist; und
ein Paar von Seitenplatten (40), die an zwei Seiten des Hauptteils (10) angeordnet sind, wobei jede der Seitenplatten (40) jeweils mit einem Durchgangsloch (41),
entsprechend der Durchdringungsbohrung (13) gebildet ist, die Scheibenwischer-Verbindungs-Vorrichtung ist **dadurch gekennzeichnet, dass** das Kopfteil mit einer Positionierungsnut (21) an der Stelle an der es mit dem Hauptteil (10) zur Positionierung des Scheibenwischer-Antriebsarms (2, 2 ', 2") verbunden ist,
ausgebildet ist,
und ein Einschubschlitz (400), der jeweils zwischen dem Paar von Seitenplatten (40) und dem Hauptteil (10) gebildet ist, um es dem Scheibenwischer-Antriebsarm (2, 2', 2") zu erlauben, eingeschoben zu werden.

2. Die allgemeine Scheibenwischer-Verbindungs-Vorrichtung nach Anspruch 1, wobei der Befestigungs-Sitz (3) mit einer Sicherungs-Welle (3a) gebildet ist, die Bodenfläche des Hauptteils (10) mit einer Sicherungsnut (15) ist gebildet, und die Sicherungsnut (15) entsprechend auf der Sicherungs-Welle (3a) gesichert ist.

3. Die allgemeine Scheibenwischer-Verbindungs-Vorrichtung nach Anspruch 2, wobei der Querschnitt der Sicherungsnut (15) in einer U-Form gebildet ist.

4. Die allgemeine Scheibenwischer-Verbindungs-Vorrichtung nach einem der Ansprüche 1 bis 3, wobei der Hauptteil (10) mit einer Mehrzahl von Hohlrillen (14) gebildet ist.

5. Die allgemeine Scheibenwischer-Verbindungs-Vorrichtung nach Anspruch 4, wobei die Hohlrillen (14) auf der Oberseite und der Bodenfläche des Hauptteils (10) angeordnet sind.

6. Die allgemeine Scheibenwischer-Verbindungs-Vorrichtung nach einem der Ansprüche 1 bis 5, wobei der Scheibenwischer-Antriebsarm (2, 2 ', 2 ") mit einer drückenden Bogenoberfläche (2a") gebildet ist, der Kopfteil (20) ist entsprechend mit einer positionierenden Bogenfläche (22) gebildet und die antreibende Bogenfläche (2a ") grenzt an die positionierende Bogenfläche (22) an.

7. Die allgemeine Scheibenwischer-Verbindungs-Vorrichtung nach einem der Ansprüche 1 bis 6, wobei die Oberseite der Positionierungsnut (21) höher als die Oberseite des Hauptteils (10) ist.

8. Die allgemeine Scheibenwischer-Verbindungs-Vorrichtung nach einem der Ansprüche 1 bis 7, wobei die Breite der Positionierungsnut (21) breiter als die Breite des Hauptteils (10) ist.

9. Die allgemeine Scheibenwischer-Verbindungs-Vorrichtung nach Anspruch 8, wobei die Positionierungsnut (21) in Verbindung mit dem Einschubschlitz (400) ist und ein Ende des Scheibenwischer-Antriebsarms (2, 2 ', 2 ") grenzt an zwei Seiten der Positionierungsnut (21) an.

10. Scheibenwischer-Antriebsarm nach einem der Ansprüche 1 bis 9, wobei das Paar von Klemmstücken (31) gabelförmig ausgebildet ist.

11. Scheibenwischer-Antriebsarm nach einem der Ansprüche 1 bis 10, wobei eine Innenwand von jeder der Seitenplatten (40) mit mehreren Rippen (42) gebildet ist und die Rippen (42) an der Außenfläche der Scheibenwischer-Antriebsarms (2, 2 ', 2") gepresst sind.

12. Scheibenwischer-Antriebsarm nach einem der Ansprüche 1 bis 11, wobei der Scheibenwischer-Antriebsarm (2, 2 ', 2 ") mit einem Satz von geöffneten Rillen (2a) gebildet ist, und das Paar von elastischen Klemmstücken (31) entsprechend auf den Satz der geöffneten Rillen (2a) geklemmt ist.

## Revendications

1. Un dispositif général de connexion d'essuie-glace (1), pour la connexion de différents types d'essuie-glace
des bras d'entraînement (2, 2 ', 2 ") sur un siège de fixation d'essuie-glace (3), et comprenant:
un corps principal (10), formé avec une extrémité avant (11) et une extrémité arrière (12) opposée à l'extrémité avant (11), et formée avec un trou percé (13) destiné à recevoir un arbre de pivotement (2a ') du bras d'entraînement d'essuie-glace (2, 2',2") devant y être reçu ;
une partie de tête (20), en prolongement à partir de l'extrémité avant (11) du corps principal (10) ;
une partie de queue (30), en prolongement à partir de l'extrémité arrière (12) du corps principal (10), et formée avec une paire de pièces de serrage élastique (31) pour verrouiller le bras d'entraînement d'essuie-glace (2, 2 ', 2") ; et
une paire de panneaux latéraux (40), disposés des deux côtés du corps principal (10), dans lequel chacun des panneaux latéraux (40) est respectivement formée avec un trou traversant (41) correspondant au trou perçé (13), le dispositif général de connexion d'essuie-glace étant **caractérisé en ce que** la partie de tête est formée avec une rainure de positionnement (21) à l'emplacement connecté au corps principal (10) pour le positionnement du bras d'entraînement d'essuie-glace (2, 2', 2"),
et une fente d'insertion (400) qui est respectivement formée entre la paire de panneaux latéraux (40) et le corps principal (10) pour permettre l'insertion du bras d'entraînement de l'essuie-glace (2, 2 ', 2").

2. Le dispositif général de connexion d'essuie-glace selon la revendication 1, dans lequel le siège de fixation (3) est formé avec un arbre de fixation (3a), la surface inférieure du corps principal (10) étant formée avec une rainure de fixation (15), et la rainure de fixation (15) étant fixée de manière correspondante sur l'arbre de fixation (3a).

3. Le dispositif général de connexion d'essuie-glace selon la revendication 2, dans lequel la section transversale de la rainure de fixation (15) présente une forme en U.

4. Le dispositif général de connexion d'essuie-glace selon l'une des revendications 1 à 3, dans lequel le corps principal (10) est formée avec une pluralité de rainures creuses (14).

5. Le dispositif général de connexion d'essuie-glace selon la revendication 4, dans lequel les rainures creuses (14) sont disposées sur la surface supérieure et la surface inférieure du corps principal (10).

6. Le dispositif général de connexion d'essuie-glace selon l'une quelconque des revendications 1 à 5, dans lequel le bras d'entraînement de l'essuie-glace (2, 2 ', 2 ") est formé avec une surface en arc de poussée (2a"), la partie de tête (20) étant formée en correspondance avec une surface d'arc de positionnement (22), et la surface en arc de poussée (2a") étant en butée sur la surface d'arc de positionnement (22).

7. Le dispositif général de connexion d'essuie-glace selon l'une quelconque générale des revendications 1 à 6, dans lequel la surface supérieure de la rainure de positionnement (21) est plus haute que la surface supérieure du corps principal (10).

8. Le dispositif d'essuie-glace générale de raccordement selon l'une quelconque des revendications 1 à 7, dans lequel la largeur de la rainure de positionnement (21) est plus grande que la largeur du corps principal (10).

9. Le dispositif général de connexion d'essuie-glace selon la revendication 8, dans lequel la rainure de positionnement (21) est en communication avec la fente d'insertion (400), et une extrémité du bras d'entraînement d'essuie-glace (2, 2 ',2") est en butée contre côtés de la rainure de positionnement (21).

10. Le dispositif général de connexion d'essuie-glace selon l'une quelconque des revendications 1 à 9, dans lequel la paire de pièces de serrage (31) présente la forme d'une fourche.

11. Le dispositif général de connexion d'essuie-glace selon l'une quelconque des revendications 1 à 10, dans lequel une paroi interne de chacun des panneaux latéraux (40) est formée avec plusieurs nervures (42) et les nervures (42) sont enfoncées à la surface extérieure du bras d'entraînement d'essuie-glace (2, 2 ', 2").

12. Le dispositif général de connexion d'essuie-glace selon l'une quelconque des revendications 1 à 11, dans lequel le bras d'entraînement de l'essuie-glace (2, 2', 2") est formé avec une série de rainures ouvertes (2a), et la paire de pièces de serrage élastique (31) est serré en conséquence sur l'ensemble des rainures ouvertes (2a).
